# EUROPEAN PATENT APPLICATION

(11) **EP 4 556 652 A1**
(43) Date of publication of application: **21.05.2025**
(21) Application number: 24208211.3
(22) Date of filing: 22.10.2024
(51) Int. Cl.: E04G 1/06, E04G 1/08, E04G 7/30

(54) **SCAFFOLD POLE CONNECTOR ARRANGEMENT**

(30) Priority: 14.11.2023 GB 202317406
(71) Applicant: Lyte Ladders and Towers Limited, Swansea SA7 9BB (GB)
(72) Inventor: JOHN, Roger, Swansea, SA15 2DF (GB)
(74) Representative: Murgitroyd & Company

(57) **Abstract**

The invention relates to a scaffold pole connector arrangement for connecting first and second scaffold poles. The scaffold pole connector arrangement comprises a body portion arranged to engage and be secured to an end of a first scaffold pole, and a projection extending from the body portion for receipt into an end of a second scaffold pole, wherein the projection is configured to receive a fixing at a plurality of rotational locations.

## Description

### BACKGROUND

The present invention relates to a connector arrangement that connects scaffold poles to one another, typically but not exclusively in a vertical orientation.

Traditional assembly of a scaffold structure requires welding. A metallic first connecting portion in the form of a flange with a male engaging portion projecting from the flange is welded to the end of a first scaffold pole. The male engaging portion must be longitudinally aligned with the longitudinal length of the first scaffold pole. Welded to the end of a second scaffold pole is a second connector portion in the form of a flange. The male engaging portion is then located into the end of the second scaffold pole causing the first and second scaffold poles to be aligned (typically in a vertical orientation). The corresponding flanges then abut. A fixing is passed through a hole in the second pole and through a corresponding hole in the male engaging portion thereby fixing the first and second scaffold poles together. This prevents relative rotation and axial separation between the first and second scaffold poles. This process is repeated for other scaffold poles and a scaffold structure of desired dimensions can be constructed.

This technique for enabling effective construction of a safe and secure scaffold structure is widely utilised however there are significant disadvantages. During assembly it is necessary to accurately rotationally align the first and second scaffold poles such that the hole in the second pole aligns with the hole in the male engaging portion in the first pole such that a fixing can be put into place and the poles secured relative to one another thereby preventing unintentional release.

### SUMMARY

Aspects of the present disclosure are set out in the accompanying independent and dependent claims. Combinations of features from the dependent claims may be combined with features of the independent claims as appropriate and not merely as explicitly set out in the claims.

According to an aspect of the present disclosure, there is provided a scaffold pole connector arrangement for connecting first and second scaffold poles comprising a body portion arranged to engage and be secured to an end of a first scaffold pole, and a projection extending from the body portion for receipt into an end of a second scaffold pole, wherein the projection is configured to receive a fixing at a plurality of rotational locations.

The present disclosure therefore reduces assembly time by enabling the first and second scaffold poles to be secured relative to one another in multiple rotational positions.

It will be appreciated that reference to the term 'scaffold' means any structural assembly that utilises a plurality of poles to build a scaffold structure. Such a scaffold may be scaled appropriate to the desired application.

It will be appreciated that for the projection to be received into an end of the second scaffold pole the first and second scaffold poles need to be substantially longitudinally aligned. In use the first and second scaffold poles will beneficially be in a substantially vertical orientation.

In an assembled configuration a fixing is passed through an opening in a wall of the second scaffold pole and is received at one of the rotational locations.

The projection may be termed a male engaging projection as it locates into the second scaffold pole.

The projection preferably comprises a formation arranged to receive a fixing at a plurality of circumferential locations. The projection preferably comprises a circumferential groove for receipt of a fixing at the plurality of rotational positions. A circumferential groove beneficially enables fixing in any rotational position.

The projection beneficially extends longitudinally to a distal end and the plurality of rotational locations are at substantially the same distance from the distal end.

The body portion preferably defines a first abutment surface for abutting against the end of the first scaffold pole and a second abutment surface for abutting (directly or indirectly) against a corresponding second scaffold pole.

Whether there is direct or indirect abutment depends on whether there is an additional second scaffold connector component, as if there is a second scaffold connector component secured to the second scaffold pole the second abutment surface may abut a second scaffold connector, where the second scaffold connector preferably comprises an abutment surface carried for example by a flange.

The scaffold pole connector beneficially extends longitudinally between the body portion and the projection, where the body portion comprises an axial groove for receipt of the first scaffold pole. The axial groove enables receipt of an end of the first scaffold pole longitudinally and allows the body portion to slide into engagement with the first scaffold pole.

The body portion preferably comprises a first portion arranged to locate into the first scaffold pole and having a first contact surface for contacting the inner surface of the first scaffold pole, and a second portion arranged to locate around an external surface of the first scaffold pole and contact the outer surface of the first scaffold pole, wherein the first and second contact surfaces define the groove therebetween.

The body portion and projection beneficially comprise a polymeric material. Welding connecting portions to ends of scaffold poles is time consuming and requires care in ensuring accurate alignment. These scaffold poles are therefore expensive to manufacture. Accordingly, by manufacturing these components from a polymeric material connection to the scaffold poles can be achieved using an adhesive material. The body portion and projection are beneficially a unitary component and can be moulded.

Also according to an aspect of the invention there is a scaffold pole connector as hereinbefore described secured to an end of a first scaffold pole.

The body portion and projection preferably comprise a first connector component, and the scaffold pole connector arrangement preferably comprises a second connector component (independent of the first connector component) arranged to engage with and be secured to an end of a second scaffold pole, the second connector component comprising a bore extending therethrough for receipt of the projection of the first scaffold connector.

The second connector component preferably comprises a first portion that extends into the second scaffold pole, and a second portion that defines a first shoulder for abutting an end of the second scaffold pole.

The second portion preferably further comprises a second shoulder for abutting the first abutment surface of the first scaffold connector.

The second connector component is beneficially made of a polymeric material.

The scaffold pole connector arrangement preferably further comprises a fixing, wherein the fixing comprises a collar for seating about the second scaffold pole, and a locking element extending from the collar for receipt by the projection at a plurality of rotational positions. The collar is preferably arranged to seat circumferentially around the second scaffold pole. The locking element preferable extends inwardly from the collar.

It will be appreciated that the locking element (which may for example be in the form of a pin) passes through an aperture in the second scaffold pole and is received by the projection.

Also according to the present invention there is a method of connecting a first and second scaffold pole (typically but not exclusively in a vertical orientation) comprising the steps of providing a connector and engaging and securing a first end of the connector to an end of a first scaffold pole, engaging a second end comprising a projection into an end of a second scaffold pole, wherein the projection is configured to receive a fixing at a plurality of rotational locations, and inserting a fixing through a wall of the second scaffold pole such that the fixing is received in one of the rotational locations.

In order to connect the first and second scaffold poles they are beneficially initially longitudinally aligned.

The method beneficially comprises the step of applying an adhesive between the first end and the first scaffold pole for adhering the first end to the first scaffold pole.

### BRIEF DESCRIPTION OF THE DRAWINGS

Embodiments of this disclosure will be described hereinafter, by way of example only, with reference to the accompanying drawings in which like reference signs relate to like elements and in which:
Figure 1 shows a schematic perspective representation of a scaffold pole connector arrangement according to an illustrative embodiment including both a first and second connector component each respectively secured to first and second scaffold poles together with a fixing;
Figure 2 shows the embodiment of Figure 1 with the first and second connector components in engagement according to an illustrative embodiment;
Figure 3 shows the embodiment of Figure 2 with the fixing in an operative position;
Figure 4a and b are schematic side view in perspective and cross section respectively of an assembled scaffold pole connector assembly according to an illustrative embodiment;
Figure 5a and b are schematic perspective and cross sectional representations of a first connector component according to an illustrative embodiment of the present disclosure;
Figure 6a and b are schematic perspective and cross sectional representations of a second connector component according to an illustrative embodiment of the present disclosure.

### DETAILED DESCRIPTION

Embodiments of this disclosure are described in the following with reference to the accompanying drawings.

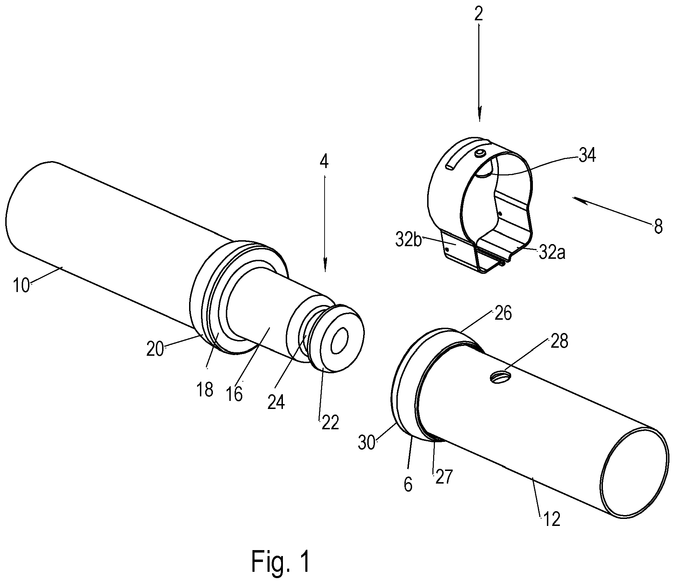

Referring to Figure 1 there is a schematic illustration of an embodiment of the disclosure where there is provided a scaffold pole connector arrangement 2 including three distinct components of a first connector component 4, second connector component 6 and mechanical fixing 8. It will be understood that in its broadest interpretation the claimed invention is to the first connector component 4 with the second connector component 6 and/or mechanical fixing 8 as preferred features. It will also be appreciated that in Figure 1 the first connector component is located into a first scaffold pole 10, and the second connector component is located into a second scaffold pole 12.

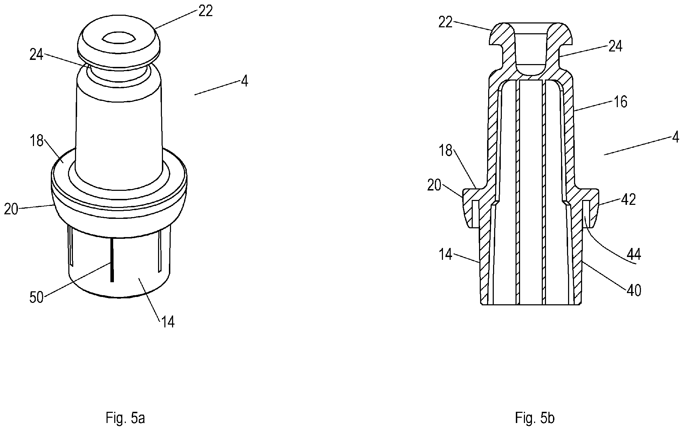

The first connector component (shown in a non-assembled configuration in Figure 5) 4 comprises a body portion 14 that is located within (and adhered to with an adhesive) and hidden by the first scaffold pole 10, and further comprises a projection 16 forming a male engaging portion that engages with the second scaffold pole 12. In the embodiment presented in Figure 1 the male engaging portion 16 engages with and is received by the second connector component 6, however it will be appreciated that although beneficial, it is not essential to provide such a second connector component 6. The forwardly facing abutment surface 18 is provided on a flange 20 which in an assembled configuration abuts against the second connector component 6. The male engaging portion 16 extends to a distal end 22 and intermediate the distal end and the flange 20 is a circumferential groove 24. Whilst a circumferential groove 24 extending around the entire periphery of the male engaging portion is beneficial for the purpose of receiving a mechanical fixing in any rotational position, it will be appreciated that a plurality of distinct openings may for example be alternatively provided.

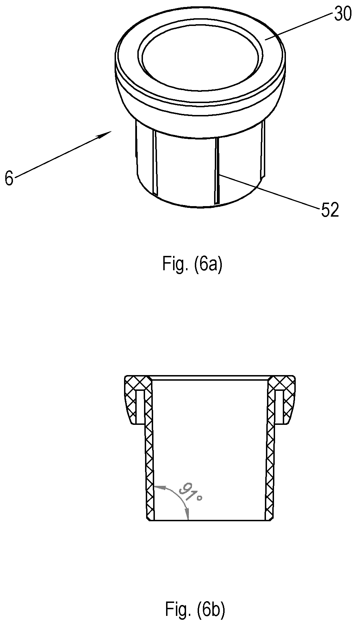

The second connector component comprises a collar for receipt of the male engaging portion 6. The second connector component is adhered to the inner surface of the second scaffold pole 12 and will be described in more detail with respect to Figure 6. The second connector comprises a flange portion 26 comprising an abutment surface 27 which abuts against and end of the second scaffold pole 12, and projects into the scaffold pole. The length it projects into the second scaffold pole 12 is less than the distance at which there is an aperture 28 through which the mechanical fixing extends in an assembled configuration. This means that the mechanical fixing can project through the wall of the second scaffold pole 12 and extend into the circumferential groove 24 thereby preventing unintentional release. The second connector component 6 further comprises a shoulder 30 for abutting against the corresponding abutment surface 18 of the first connector component.

The assembly further comprises a mechanical fixing 8. In the embodiment shown the mechanical fixing 8 is in the form of a clip comprising first and second jaws 32a,b that are deformable outwardly and are capable of deforming to receive the second scaffold pole 12 and clip together. A pin 34 extends inwardly and is arranged to be received by the aperture 28 and when assembled then projects into the circumferential groove 24.

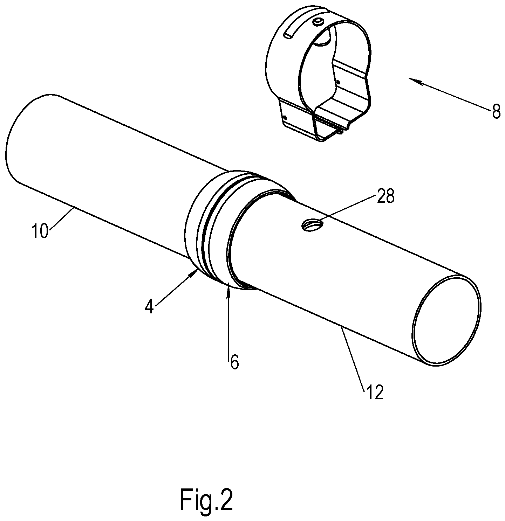

Referring now to Figure 2, the assembly is partially assembled. The first and second scaffold poles 10, 12 with the first and second connector components glued into the respective ends of the poles are axially aligned and brought together such that the male engaging portion is received into the collar 26 and thus into the second scaffold pole. The respective abutment shoulder 30 and abutment surface abut against one another and the aperture 28 and circumferential groove 24 align.

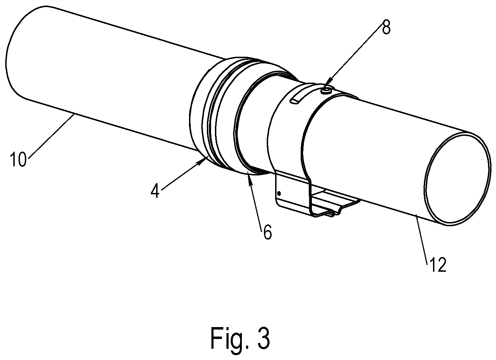

Referring to Figure 3, the assembly is completely assembled with the mechanical fixing in position with the pin 34 projecting through the aperture 28 into the circumferential groove.

It will be appreciated that at least the first and second connector components can be made of a polymeric material. They can be readily adhered to the inner surface of the respect scaffold poles meaning manufacturing time can be significantly reduced.

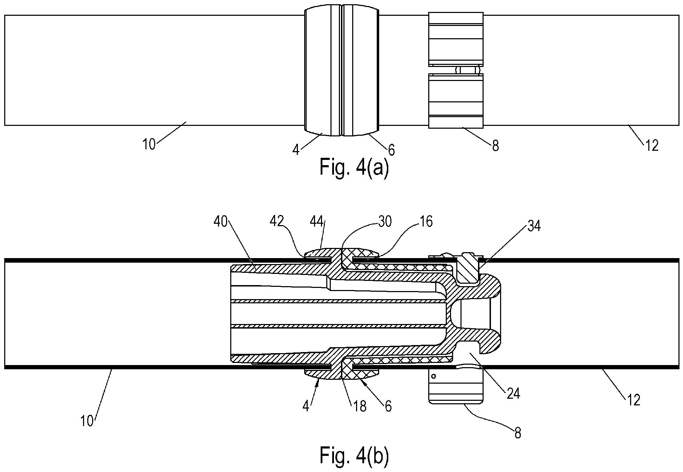

Referring now to Figure 4 schematic side and cross-sectional representations are provided with the scaffold pole connector arrangement in an assembled configuration. The cross-sectional representation in Figure 4b shows the engagement of the respective first and second connector components 4,6 with the respective first and second scaffold poles 10,12. In cross sectional view the configuration of the first and second connector components is visible. With respect to the first connector component 4 the body portion 14 comprises a first region 40 that seats into the first scaffold pole 10 and a second region 42 that seats outside the first scaffold pole 10 meaning that an axial groove 44 is defined between the first and second regions and the end of the first scaffold pole 10 is received into this groove 44. Adhesive can be applied between the first region 40 and the inside of the scaffold pole 10 and if necessary, between the second region 42 and the outside surface of the scaffold pole 10. The abutment surface 18 faces away from the end of the first scaffold pole 10 and can be seen to abut the abutment shoulder 30 of the second connector component. The male engaging portion 16 projects forwardly into the second scaffold pole 12 and communicates with an internal surface of the second connector component 6. The depth to which the second connector component extends is less than the projection distance of the male engaging portion 16 meaning that the circumferential groove 24 is exposed and available to receive the mechanical fixing 34. The second connector component may be secured to the second scaffold pole 12 in the same manner as the first connector component, and again may comprise an axial groove 48 defined between first and second regions which respective sit inside and outside the second scaffold pole and which is arranged to receive the end of the second scaffold pole 12. The pin 34 of the mechanical fixing 8 is shown extending into the circumferential groove 24.

Referring to Figure 5a there is a schematic perspective representation of the first connector component 4 showing an external engagement surface with ridges 50 for adhesion to an inner surface of the first scaffold pole 10. Figure 5b shows the first connector component 4 in cross section.

Referring to Figure 6a there is a schematic perspective representation of the second connector component for receiving and guiding the first connector component showing an external engagement surface with ridges 52 for adhesion to the inner surface of the second scaffold pole. Figure 6b shows the second connector component 6 in cross section showing the circumferential groove 48 for receipt of the end of the second scaffold pole 12.

Although particular embodiments of this disclosure have been described, it will be appreciated that many modifications/additions and/or substitutions may be made within the scope of the claims.

## Claims

1. A scaffold pole connector arrangement for connecting first and second scaffold poles comprising a body portion arranged to engage and be secured to an end of a first scaffold pole, and a projection extending from the body portion for receipt into an end of a second scaffold pole, wherein the projection is configured to receive a fixing at a plurality of rotational locations.

2. A scaffold pole connector according to claim 1 wherein the projection comprises a formation arranged to receive a fixing at a plurality of circumferential locations.

3. A scaffold pole connector according to any preceding claim wherein the projection extends longitudinally to a distal end and the plurality of rotational locations are at substantially the same distance from the distal end.

4. A scaffold pole connector according to any preceding claim wherein the projection comprises a circumferential groove for receipt of a fixing at the plurality of rotational positions; and/or wherein the connector extends longitudinally between the body portion and the projection, where the body portion comprises an axial groove for receipt of the first scaffold pole.

5. A scaffold pole connector according to any preceding claim wherein the scaffold pole connector extends longitudinally between the body portion and the projection, where the body portion comprises an axial groove for receipt of an end of the first scaffold pole.

6. A scaffold pole connector according to claim 5 wherein the body portion comprises a first portion arranged to locate into the first scaffold pole and having a first contact surface for contacting the inner surface of the first scaffold pole, and a second portion arranged to locate around an external surface of the first scaffold pole and contact the outer surface of the first scaffold pole, wherein the first and second contact surfaces define the groove therebetween.

7. A scaffold pole connector according to any preceding claim wherein the body portion and projection comprise a polymeric material, and/or wherein the scaffold pole connector is secured to an end of a first scaffold pole.

8. A scaffold pole connector arrangement according to any preceding claim wherein the body portion and projection comprise a first connector component, and the scaffold pole connector arrangement comprises a second connector component (independent of the first connector component) arranged to engage with and be secured to an end of a second scaffold pole, the second connector component comprising a bore extending therethrough for receipt of the projection of the first scaffold connector.

9. A scaffold pole connector arrangement according to claim 8 wherein the second connector component comprises a first portion that extends into the second scaffold pole, and a second portion that defines a first shoulder for abutting an end of the second scaffold pole.

10. A scaffold pole connector arrangement according to any of claims 8-9 wherein the second connector component is made of a polymeric material.

11. A scaffold pole connector arrangement according to any preceding claims further comprising a fixing, wherein the fixing comprises a collar for seating about the second scaffold pole, and a locking element extending from the collar for receipt by the projection at a plurality of rotational positions.

12. A method of connecting a first and second scaffold pole comprising the steps of providing a connector and engaging and securing a first end of the connector to an end of a first scaffold pole, engaging a second end comprising a projection into an end of a second scaffold pole wherein the projection is configured to receive a fixing at a plurality of rotational locations, and inserting a fixing through a wall of the second scaffold pole such that the fixing is received in one of the rotational locations.

13. A method according to claim 12 comprising the step of applying an adhesive between the first end and the first scaffold pole for adhering the first end to the first scaffold pole.

14. A method according to any of claims 13-14 wherein the body and projection comprises a first connector component, and a second connector component is provided having a bore extending therethrough, and where the method comprises engaging and securing the second scaffold connector to an end of a second scaffold pole and locating the projection of the first connector component into the bore of the second connector.

15. A method according to claim 14 comprising the step of applying an adhesive between the second scaffold connector and second scaffold pole for adhering the second scaffold connector to the second scaffold pole.
